# EUROPÄISCHE PATENTSCHRIFT

(11) **EP 2 137 039 B1**
(45) Veröffentlichungstag und Bekanntmachung des Hinweises auf die Patenterteilung: **03.06.2015**
(21) Anmeldenummer: 08735242.3
(22) Anmeldetag: 15.04.2008
(51) Int. Cl.: B60W 20/00, B60W 30/18, B60W 10/06, B60W 10/08, B60W 10/10, B60K 6/50, B60K 6/543, B60K 6/485

(54) **HYBRIDANTRIEBSSTRANG**
HYBRID DRIVE TRAIN
CHAÎNE CINÉMATIQUE HYBRIDE

(30) Priorität: 20.04.2007 DE 102007019156
(43) Veröffentlichungstag der Anmeldung: 30.12.2009
(73) Patentinhaber: DEUTZ Aktiengesellschaft, 51149 Köln (DE)
(72) Erfinder: FRIESEN, Andreas, 53773 Hennef (DE); BRUN, Marco, 40221 Düsseldorf (DE); BUROW, Walter, 51469 Bergisch-Gladbach (DE)
(86) Internationale Anmeldenummer: PCT/EP2008/002974
(87) Internationale Veröffentlichungsnummer: WO 2008/128674

(56) Entgegenhaltungen:
- EP-A- 1 199 411
- WO-A-98/47732
- DE-A1- 3 501 608
- DE-A1- 3 536 247
- DE-A1- 19 955 311
- DE-A1-102004 005 673

## Beschreibung

Die Erfindung betrifft einen Hybridantriebsstrang eines Fahrzeugs, insbesondere einer mobilen Arbeitsmaschine mit einer Verbrennungskraftmaschine und einer Elektromaschine.

Ein derartiger Hybridantriebsstrang ist aus der ATZ 7-8/2002, Seiten 664 - 674 bekannt. Dabei ist die Elektromaschine mit der Verbrennungskraftmaschine und weiterhin einem Getriebe verschaltet. Das Getriebe ist mit den Antriebsrädern eines Fahrzeugs verbunden. Bei der dargestellten Ausgestaltung wird die Elektromaschine in erster Linie als integrierter Starter und Generator eingesetzt, wobei in geringem Umfang eine Drehmomentunterstützung der Verbrennungskraftmaschine vorgesehen ist.

Der Erfindung liegt die Aufgabe zugrunde, einen derartigen Hybridantriebsstrang eines Fahrzeugs zu verbessern.

Dies wird dadurch erreicht, dass der Antriebsstrang weiterhin eine hydraulische Arbeitsmaschine aufweist, wobei die Elektromaschine parallel angeordnet räumlich an die Stelle des Schrungrades tritt.

Gemäß der vorliegenden Erfindung werden folgende Vorteile erzielt:
Kraftstoffersparnis durch Vergrößerung der mittleren Auslastung der Verbrennungskraftmaschine,
Verbesserung der dynamischen Eigenschaften des Antriebs,

Einstufung der Verbrennungskraftmaschine in eine günstigere Emissionsklasse durch Verkleinerung der Leistung.

### Anordnung der Komponenten

Der konventionelle Antriebsstrang einer mobilen Arbeitsmaschine, bestehend aus einer Verbrennungskraftmaschine und hydraulischen Antriebseinheiten, wird erweitert um eine parallel angeordnete Elektromaschine, die räumlich an die Stelle des Schwungrades tritt. Die Elektromaschine wird über eine Leistungselektronik aus einem elektrischen Energiespeicher gespeist und kann in allen vier Quadranten betrieben werden.

### Betriebsart

Der Diesel-Elektro-Hybrid wird in der gegebenen Anordnung drehzahlgeregelt betrieben. Das heißt, der Fahrerwunsch wird als Solldrehzahl interpretiert. Diese Betriebsart hat sich vor allem im Bereich der mobilen Arbeitsmaschinen etabliert. Dabei soll der Diesel-Elektro-Hybrid auch bei wechselnder Belastung (hervorgerufen durch Arbeitshydraulik, Antriebsbelastung und andere Abtriebe) möglichst die vom Gerätebediener gewünschte Drehzahl einregeln, indem das vom Diesel-Elektro-Hybrid erzeugte Moment entsprechend angepasst wird.

### Funktion Start/Stop

Der Start der Verbrennungskraftmaschine (VKM) erfolgt gegenüber dem konventionellen Antrieb nicht über einen separaten Anlassermotor, sondern direkt über die Elektromaschine. Anders als im konventionellen Antriebsstrang kann die VKM innerhalb eines sehr kurzen Zeitraums (< 200 ms) gestartet werden, so dass die Möglichkeit einer automatischen Start/Stopp-Funktion gegeben ist.

Die Start/Stopp-Funktion bewirkt, dass die VKM nur dann betrieben wird wenn sie tatsächlich benötigt wird. Das heißt: Befindet sich die VKM für einen bestimmten Zeitraum im niedrigen Leerlauf, wird sie vom System abgestellt.

Sobald der Gerätebediener eine Bedienungskomponente (zum Beispiel Fahrpedal, Lenkeinrichtung, Ansteuereinheit der Arbeitshydraulik etc.) betätigt, wird die VKM sofort wieder gestartet, so dass der Bediener nahezu keine Verzögerung wahrnimmt.

Durch Vermeidung von unnötigen Leerlaufzeiten führt diese Funktion zur Kraftstoffeinsparung.

### Funktion Booster

In geeigneten Betriebspunkten wird die Elektromaschine motorisch betrieben, um das Drehmoment des gesamten Antriebs zu erhöhen.

Das benötigte Drehmoment, welches zur Aufrechterhaltung der vom Gerätebediener gewünschten Drehzahl notwendig ist, wird durch einen Regelalgorithmus berechnet und von der Leistungselektronik umgesetzt. Das System berücksichtigt dabei alle im System relevanten Zustände wie zum Beispiel Ladezustand der Batterie, Temperaturen einzelner Komponenten etc.

Diese Funktion ermöglicht den Einsatz einer Verbrennungskraftmaschine mit verringerter Leistung. Kurzfristig auftretende Spitzenleistungen können durch die Unterstützung der motorisch betriebenen Elektromaschine abgedeckt werden, so dass die Verbrennungskraftmaschine nicht mehr auf die benötigte/gewünschte Spitzenleistung ausgelegt werden muss.

Neben dem Boosten bei der Abdeckung von Leistungsspitzen besteht die Möglichkeit, den motorischen Betrieb der Elektromaschine zur Steigerung der Dynamik des Antriebsstrangs zu nutzen. Insbesondere, wenn die Einspritzmenge der Verbrennungskraftmaschine durch die ladedruckabhängige Füllungsbegrenzung unterhalb der Dachkurve limitiert wird, kann zur Steigerung der Dynamik eine motorische Leistung der Elektromaschine so lange aufgebracht werden, bis diese Limitierung durch ausreichenden Ladedruck nicht mehr notwendig ist.

### Funktion Laden

Das Aufladen des elektrischen Energiespeichers kann durch das Erzeugen eines generatorischen Drehmoments der Elektromaschine während des Betriebs erfolgen. Dabei ist das erzeugte Drehmoment von dem Ladezustand der Batterie, der Auslastung der Verbrennungskraftmaschine und verschiedenen Systembedingungen abhängig. Das Drehmoment kann als Stellgröße eines Reglers oder auch gesteuert aufgeschaltet werden.

### Funktion Rekuperation

Unter Rekuperation versteht man generell die Rückgewinnung der mechanischen Bremsenergie in elektrische Energie.

Bei konventionellen mobilen Arbeitsmaschinen wird nahezu der vollständige Anteil der Bremsenergie durch den Schleppbetrieb der Verbrennungskraftmaschine bei hohen Drehzahlen und durch gezieltes Aufschalten hydraulischer Lasten erzielt.

Bei dieser Konfiguration eines Hybrid-Antriebes wird die Bremsenergie durch Aufschalten eines Bremsmoments auf die Elektromaschine erzielt. Hierdurch werden zum einen die hohen Motordrehzahlen vermieden, zum anderen wird die Bremsenergie über die Elektromaschine und die Leistungselektronik in den elektrischen Energiespeicher gespeist.

### Funktion Lastpunktverschiebung

Bei hybriden Antriebssträngen mobiler Arbeitsmaschinen, bestehend aus den erfindungsgemäßen Komponenten Verbrennungskraftmaschine (Dieselmotor), Elektromaschine mit Umrichter, elektrischem Energiespeicher und hydraulischem Fahr- und Arbeitsantrieb, wird zur Reduktion von CO₂-Emissionen und Kraftstoffverbrauch unter anderem die Funktion der Lastpunktverschiebung eingesetzt.

Mittels dieser Funktion werden die jeweiligen Arbeitspunkte im Kennfeld der Verbrennungskraftmaschine (Moment als Funktion der Drehzahl) entlang der Kurven konstanter Leistung (Leistungshyperbeln) verschoben, um die Arbeitspunkte der Verbrennungskraftmaschine in die Bereiche des jeweilig optimalen Kraftstoffverbrauchs zu verlagern.

Zur Umsetzung dieser Funktionalität werden elektronisch regelbare hydraulische Antriebseinheiten (Hydraulikpumpen und Hydraulikmotoren) benötigt, mittels derer eine kontinuierliche Übersetzungsverstellung dargestellt werden kann. Die somit erhöhte Anzahl der Freiheitsgrade im Antriebsstrang kann dazu genutzt werden, die Solldrehzahl der Verbrennungskraftmaschine innerhalb bestimmter Grenzen frei zu wählen. Des Weiteren wird das Schluckvolumen der hydraulischen Antriebseinheiten dahingehend angepasst, dass die maximale Fahrgeschwindigkeit der mobilen Arbeitsmaschine bei Arbeitspunkten der Verbrennungskraftmaschine mit optimalem Kraftstoffverbrauch dargestellt werden kann.

Bei der Lastpunktverschiebung wird vom Hybrid System-Steuergerät, unter anderem in Abhängigkeit der Parameter aktuelles Moment der Verbrennungskraftmaschine, aktuelles Moment der Elektromaschine, Ladezustand des Energiespeichers und aktueller Drehzahl von Verbrennungskraftmaschine und Elektromaschine, mittels einer im Hybrid System-Steuergerät implementierten Betriebsstrategie die optimale Solldrehzahl ermittelt und als Sollwert dem nachgeschalteten Drehzahlregler übergeben.

Der Drehzahlregler befindet sich hierbei im Hybrid System-Steuergerät. Als Eingangsgröße dient diesem Drehzahlregler die Regeldifferenz aus Solldrehzahl und Istdrehzahl. Aufgrund der parallelen Anordnung von Verbrennungskraftmaschine und Elektromaschine wird ein Drehzahlregler für beide Komponenten verwendet. Der Drehzahlregler wird begrenzt durch die minimalen und maximalen Summenmomente von Verbrennungskraftmaschine und Elektromaschine. Die Ausgangsgröße des Drehzahlreglers ist die Stellgröße Moment, die in der auf den Drehzahlregler folgenden Betriebsstrategie unter Berücksichtigung der Zielkriterien "Optimaler Kraftstoffverbrauch" und "Optimale Dynamik" auf die Komponenten Verbrennungskraftmaschine (Dieselmotor) und Elektromaschine aufgeteilt wird und denen als jeweiliges Sollmoment übergeben wird.

Gegenüber konventionellen Antriebssträngen mobiler Arbeitsmaschinen bestehen beim Einsatz der Funktion Lastpunktverschiebung mit einem hybriden Antrieb folgende Vorteile:
- Bei einem konventionellen Antrieb wird aufgrund der sehr dynamischen Laständerungen des Fahr- oder Arbeitsantriebs beim Betrieb der Verbrennungskraftmaschine eine hohe Leistungsreserve vorgehalten, um auf die Laständerungen adäquat reagieren zu können. Insbesondere bei aufgeladenen Verbrennungskraftmaschinen ist diese Leistungsreserve notwendig, um die zeitliche Dauer des Ladedruckaufbaus zu reduzieren. Beim hybriden Antriebsstrang besteht die Möglichkeit, diese Leistungsreserve der Verbrennungskraftmaschine deutlich zu reduzieren. Bei dynamischen Laständerungen wird so lange eine motorische Leistung der Elektromaschine aufgebracht, bis die Verbrennungskraftmaschine sich in einem Arbeitspunkt befindet, in dem diese eigenständig die angeforderte Leistung aufbringen kann. Besonders durch die schnelle Stellmöglichkeit des Moments der Elektromaschine wird diese Strategie begünstigt.
- Die Lastpunktverschiebung bei konventionellen Antrieben hin zu geringeren Drehzahlen und somit höheren Drehmomenten ist maximal bis zu der Drehzahl der Verbrennungskraftmaschine möglich, bei der diese das maximale Drehmoment aufbringt. Dies ist darin begründet, dass bei Drehzahlen kleiner als die Drehzahl maximalen Drehmoments eine Laständerung schnell zum Abwürgen der Verbrennungskraftmaschine führen kann beziehungsweise führt. Bei hybriden Antriebssträngen wird auch hier eine motorische Leistung der Elektromaschine dazu genutzt, die Verbrennungskraftmaschine in einen Arbeitspunkt zu verlagern, in dem diese die Leistung eigenständig aufbringen kann.

Weitere vorteilhafte Ausgestaltungen der Erfindung sind der Zeichnungsbeschreibung zu entnehmen, in der ein in den Fig. dargestelltes Ausführungsbeispiel der Erfindung näher beschrieben ist.

Es zeigen:

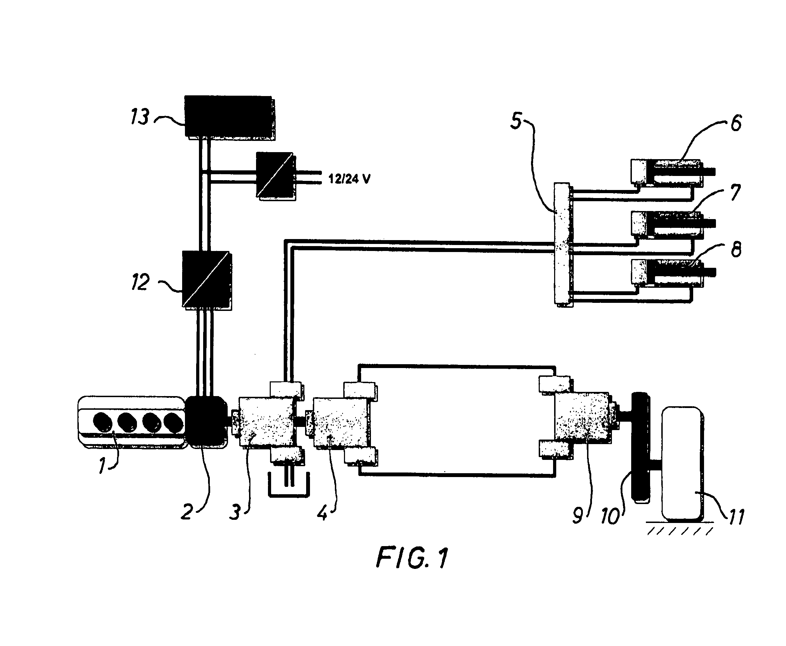

- Fig. 1: in einer schematischen Ansicht die Anordnung und das Zusammenwirken der einzelnen Komponenten,
- Fig. 2: in einem Kennfeld die Funktion der Lastpunktverschiebung und
- Fig. 3: in einem Kennfeld die Funktion "Lastpunktverschiebung".

Eine Verbrennungskraftmaschine 1, die insbesondere eine selbstzündende Brennkraftmaschine (Dieselmotor) ist, ist direkt mit einer Elektromaschine 2 gekoppelt, die anstelle eines Schwungrades mit der Kurbelwelle der Verbrennungskraftmaschine 1 verschaltet ist. Der Stator dieser Elektromaschine 2 ist dabei mit dem Kurbelgehäuse verbunden und der Rotor mit der Kurbelwelle verschaltet. Der Rotor ist weiterhin mit einer Zahnradpumpe 3 und weiter mit einer Axialkolbenpumpe 4 verschaltet. Der Ausgang der Zahnradpumpe 3 ist über Proportionalventile 5 (beispielsweise) mit einem Arbeitszylinder 6, einem Hubzylinder 7 und einem Lenkzylinder 8 verschaltet. Zahnradpumpe 3 und Axialkolbenpumpe 4 sind hydraulische Arbeitsmaschinen.

Die Axialkolbenpumpe 4 ist mit einem Axialkolbenmotor 9 verschaltet, der über eine Getriebestufe 10 mit einem oder mehreren Antriebsrädern 11 der mobilen Arbeitsmaschine verschaltet ist. Die Getriebestufe 10 enthält normalerweise ein festes Untersetzungsverhältnis, kann aber auch als Schaltgetriebe ausgebildet sein. Denkbar ist auch der Einsatz eines stufenlos einstellbaren Getriebes. Zusammen mit dem in weiten Bereichen einstellbaren Übersetzungsverhältnis zwischen der Eingangswelle der zweiten Axialkolbenpumpe 4 und der Ausgangswelle des Axialkolbenmotors 8 ergeben sich damit weitreichende Einstellmöglichkeiten einerseits für die Drehzahl der Antriebsräder 11 (und somit für die Geschwindigkeit des Fahrzeugs) und andererseits für die Drehzahl der Kurbelwelle der Verbrennungskraftmaschine 1 bei einer vorgegebenen Geschwindigkeit des Fahrzeugs.

Die Elektromaschine 2 ist über einen Vierquadrantenumrichter 12 mit einem elektrischen Energiespeicher 13 verschaltet. Weiterhin ist ein Hybrid-System-Steuergerät vorgesehen, mit dem alle Einzelsteuergeräte der Komponenten, insbesondere des Antriebsstrangs und des Speicherstrangs, koordiniert werden können.

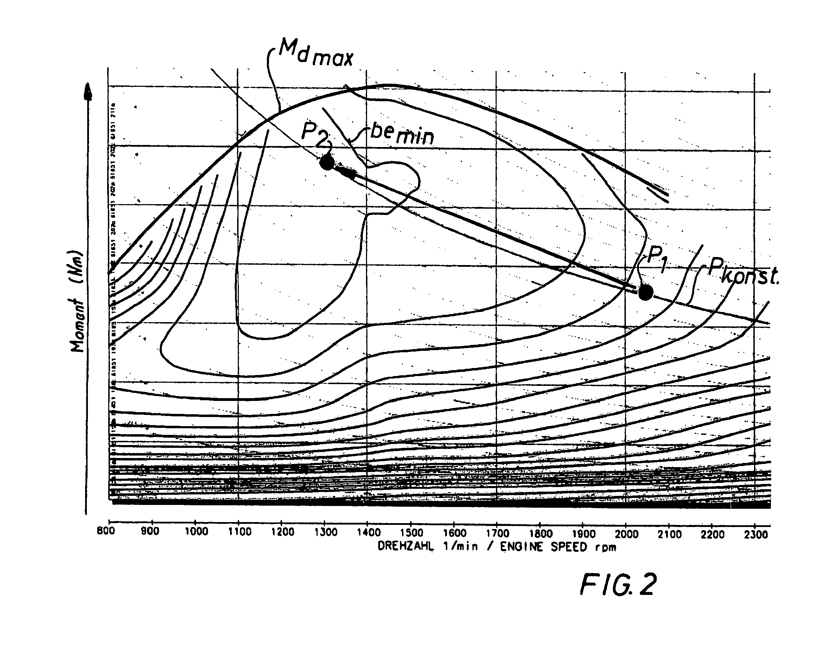

Fig. 2 zeigt ein typisches Kennfeld einer Verbrennungskraftmaschine (Moment als Funktion der Drehzahl). In diesem Kennfeld ist als Dachkurve das von der Verbrennungskraftmaschine erreichbare maximale Drehmoment M_{dmax} eingetragen. Unter dieser Dachkurve sind als Muschelkurven die Linien mit konstantem spezifischen (Kraftstoff)-Verbrauch dargestellt, wobei, ausgehend von der beₘᵢₙ Linie, die weiteren Linien einen stufenweise steigenden Verbrauch kennzeichnen. Schließlich sind die Kurven konstanter Leistung Pₖₒₙₛₜ (Leistungshyperbeln) der Verbrennungskraftmaschine eingetragen. Grundsätzlich kann nun die Verbrennungskraftmaschine, die mit einer konstanten Leistung Pₖₒₙₛₜ an dem Punkt P₁ betrieben wird, mit der gleichen konstanten Leistung Pₖₒₙₛₜ an dem Punkt P₂ betrieben werden, wobei der Punkt P₂ aber im beₘᵢₙ Feld liegt. Durch diese Verstellung wird bei gleicher Leistungsabgabe eine Verbrauchsreduzierung der Verbrennungskraftmaschine erreicht.

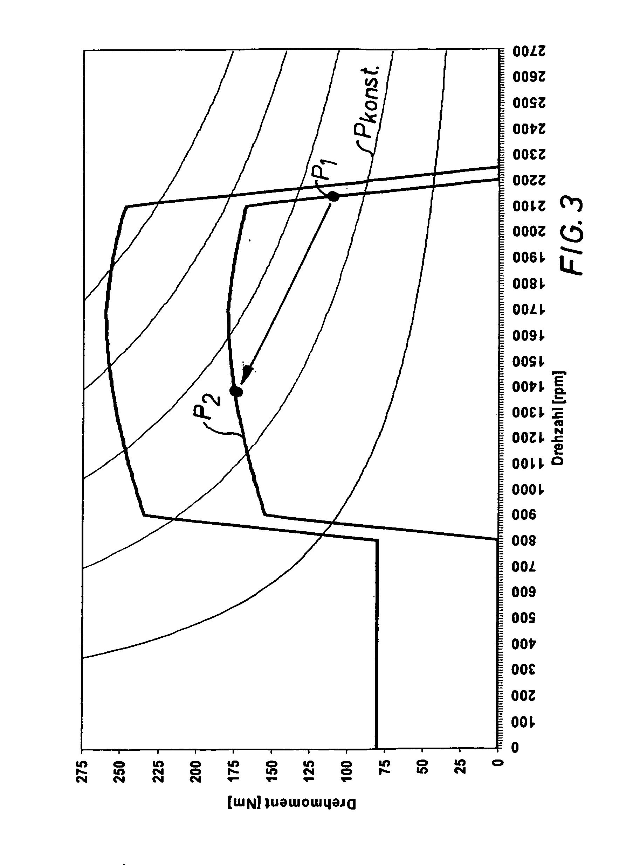

Problematisch ist aber bei konventionellem derartigen Antriebsstrang, dass bei einer solchen Verstellung - wie in Fig. 3 dargestellt - dies immer mit einer Annäherung an die Dachkurve des erreichbaren maximalen Drehmoments verbunden ist. Wird, wie in Fig. 3 dargestellt, bei der Verstellung die Dachkurve mit dem Leistungspunkt P₂ angefahren, weist die Verbrennungskraftmaschine auch schon bei geringen Laständerungen keine Leistungsreserven mehr auf und die Verbrennungskraftmaschine wird abgewürgt. Durch die erfindungsgemäße Ausgestaltung steht dann aber noch die Leistung, die durch die Elektromaschine aufgebracht werden kann, additiv zur Verfügung. Das heißt mit anderen Worten, es kann bedenkenlos eine Leistungsverstellung bis auf die M_{dmax} Kurve hin zu einer Verringerung des Verbrauchs gefahren werden, ohne dass bei Laständerungen ein Abwürgen der Verbrennungskraftmaschine zu befürchten ist, da für diesen Fall die zusätzliche Leistung der Elektromaschine zur Verfügung steht.

### Bezugszeichen

- 1: Verbrennungskraftmaschine
- 2: Elektromaschine
- 3: Zahnradpumpe
- 4: Axialkolbenpumpe
- 5: Proportionalventile
- 6: Arbeitszylinder
- 7: Hubzylinder
- 8: Lenkzylinder
- 9: Axialkolbenmotor
- 10: Getriebestufe
- 11: Antriebsräder
- 12: Vierquadrantenumrichter
- 13: Energiespeicher

## Patentansprüche

1. Hybridantriebsstrang eines Fahrzeugs, insbesondere einer mobilen Arbeitsmaschine mit einer Verbrennungskraftmaschine (1) und einer Elektromaschine (2),
***dadurch gekennzeichnet,* dass** der Antriebsstrang weiterhin eine hydraulische Arbeitsmaschine (4,9) aufweist, wobei die Elektromaschine parallel angeordnet räumlich an die Stelle des Schwungrades tritt.

2. Hybridantriebsstrang nach Anspruch 1,
***dadurch gekennzeichnet,* dass** die Arbeitsmaschine eine Axialkolbenpumpe (4) ist.

3. Hybridantriebsstrang nach einem der vorhergehenden Ansprüche,
***dadurch gekennzeichnet,* dass** mit der Arbeitsmaschine ein hydraulischer Motor, insbesondere ein Axialkolbenmotor (9), verschaltet ist.

4. Hybridantriebsstrang nach einem der vorhergehenden Ansprüche,
***dadurch gekennzeichnet,* dass** mit der Arbeitsmaschine zumindest ein hydraulisches Stellelement, insbesondere ein Arbeitszylinder (6), ein Hubzylinder (7) und/oder ein Lenkzylinder (8) gesteuert, insbesondere über ein oder mehrere Proportionalventile (5) verschaltet ist/sind.

5. Hybridantriebsstrang nach einem der vorhergehenden Ansprüche,
***dadurch gekennzeichnet,* dass** der Antriebsstrang drehzahlgeregelt betrieben wird.

6. Hybridantriebsstrang nach einem der vorhergehenden Ansprüche,
***dadurch gekennzeichnet,* dass** der Hybridantriebsstrang in der Form steuerbar ist, dass an der Verbrennungskraftmaschine (1) eine Lastpunktverschiebung einstellbar ist.

7. Hybridantriebsstrang nach Anspruch 6,
***dadurch gekennzeichnet,* dass** eine Lastpunktverschiebung bis in den Bereich des Erreichen des maximalen Drehmoments der Verbrennungskraftmaschine (1) erfolgt und dass dann die Elektromaschine (2) motorisch betrieben wird.

## Claims

1. Hybrid drivetrain of a vehicle, in particular a mobile plant vehicle having an internal combustion engine (1) and an electrical machine (2), ***characterized in that*** the drivetrain further comprises a hydraulic machine (4, 9), the electrical machine, arranged in parallel, taking the place of the flywheel.

2. Hybrid drivetrain according to Claim 1, ***characterized in that*** the machine is an axial piston pump (4).

3. Hybrid drivetrain according to either of the preceding claims, ***characterized in that*** a hydraulic motor, in particular an axial piston motor (9) is connected to the machine.

4. Hybrid drivetrain according to one of the preceding claims, ***characterized in that*** at least one hydraulic actuating element, in particular a working cylinder (6), a lift cylinder (7) and/or a steering cylinder (8), is/are controllably connected to the machine, in particular by way of one or more proportional valves (5).

5. Hybrid drivetrain according to one of the preceding claims, ***characterized in that*** the drivetrain is operated with its rotational speed controlled.

6. Hybrid drivetrain according to one of the preceding claims, ***characterized in that*** the hybrid drivetrain can be controlled **in that** a load point shift on the internal combustion engine (1) is adjustable.

7. Hybrid drivetrain according to Claim 6, ***characterized in that*** a load point shift occurs into the range where the maximum torque of the internal combustion engine (1) is attained and that the electrical machine (2) is then operated as a motor.

## Revendications

1. Chaîne cinématique hybride d'un véhicule, en particulier d'une machine mobile ayant un moteur à combustion interne (1) et une machine électrique (2), **caractérisée en ce que** la chaîne cinématique comprend en outre une machine de travail hydraulique, (4, 9), la machine électrique, disposée parallèlement, se substituant spatialement au volant d'inertie.

2. Chaîne cinématique hybride selon la revendication 1, **caractérisée en ce que** la machine est une pompe à piston axial (4).

3. Chaîne cinématique hybride selon l'une quelconque des revendications précédentes, **caractérisée en ce qu'**un moteur hydraulique, en particulier un moteur à piston axial (9), est connecté à la machine.

4. Chaîne cinématique hybride selon l'une quelconque des revendications précédentes, **caractérisée en ce qu'**au moins un élément d'actionnement hydraulique, en particulier un cylindre de travail (6), un cylindre de levage (7) et/ou un cylindre de direction (8), est/sont connecté(s) de manière commandée à la machine, en particulier par le biais d'une ou de plusieurs soupapes proportionnelles (5).

5. Chaîne cinématique hybride selon l'une quelconque des revendications précédentes, **caractérisée en ce que** la chaîne cinématique fonctionne de manière régulée en termes de vitesse de rotation.

6. Chaîne cinématique hybride selon l'une quelconque des revendications précédentes, **caractérisée en ce que** la chaîne cinématique hybride peut être commandée **en ce qu'**un déplacement du point de charge sur le moteur à combustion interne (1) est ajustable.

7. Chaîne cinématique hybride selon la revendication 6, **caractérisée en ce qu'**un déplacement du point de charge se produit jusque dans la plage dans laquelle le couple maximum du moteur à combustion interne (1) est atteint et **en ce que** la machine électrique (2) fonctionne alors en tant que moteur.
